(19) Europäisches Patentamt
European Patent Office
Office européen des brevets

(11) **EP 4 776 239 A1**

(12) **EUROPEAN PATENT APPLICATION**

(43) Date of publication:
**15.07.2026 Bulletin 2026/29**

(21) Application number: **25150981.6**

(22) Date of filing: **09.01.2025**

(51) International Patent Classification (IPC):
***G06V 10/764*** *(2022.01)* ***G06V 10/82*** *(2022.01)*
***G06V 20/70*** *(2022.01)*

(52) Cooperative Patent Classification (CPC):
**G06V 10/82; G06V 10/764; G06V 20/70**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **TOYOTA JIDOSHA KABUSHIKI KAISHA**
**Aichi-ken, 471-8571 (JP)**

(72) Inventors:
- **ALJUNDI, Rahaf**
  **1140 BRUSSELS (BE)**
- **SEIFI, Soroush**
  **1140 BRUSSELS (BE)**
- **DOROVATAS, Vaggelis,**
  **1140 BRUSSELS (BE)**
- **OLMEDA REINO, Daniel**
  **1140 BRUSSELS (BE)**

(74) Representative: **Cabinet Beau de Loménie**
**103, rue de Grenelle**
**75340 Paris Cedex 07 (FR)**

Remarks:
Amended claims in accordance with Rule 137(2) EPC.

(54) **METHOD FOR IDENTIFYING A PERSONALIZED INSTANCE OF A GIVEN OBJECT IN A TARGET IMAGE**

(57) A method for identifying a personalized instance of a given object in a target image (*I*), comprising:
- obtaining a plurality of embedding vectors ($e_p$) of objects from a mask of objects in a set of reference images associated with said objects, said embedding vectors ($e_p$) being obtained from an image encoder trained within a self-[2]supervised foundation model, one embedding vector being associated with one reference image for one object,
- storing said plurality of embedding vectors ($e_p$) of said objects with identifiers associated with said objects,
- determining that the target image (*I*) comprises said personalized instance of said given object based on a similarity between
- an embedding vector ($e_{oi}$) of said personalized instance of said object obtained using said trained foundation model, and
- the embedding vectors ($e_p$) stored in said memory.

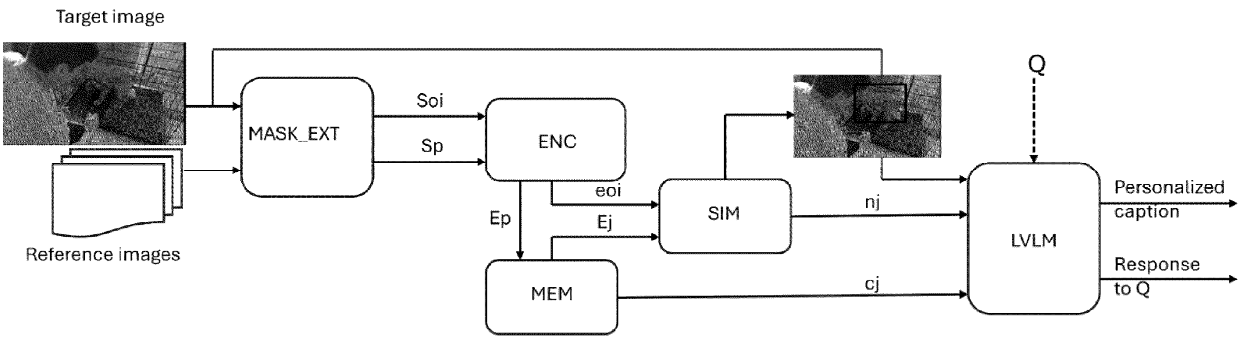


**FIG.6**

EP 4 776 239 A1

## Description

BACKGROUND OF THE INVENTION

1. Field of the Invention

The present disclosure relates to the field of personalized objects identification in images.

2. Description of Related Art

Large Vision Language Models (LVLMs) have significant potential to deliver personalized assistance by adapting to individual users' unique needs and preferences. Large Vision Language Models (LVLMs) have demonstrated impressive capabilities in reasoning about visual content and answering visual questions across various domains.

Personalization of LVLMs is an emerging area that involves customizing models to recognize specific object instances and provide tailored responses.

The task of personalizing vision-language models was recently introduced by Yuval Alaluf, Elad Richardson, Sergey Tulyakov, Kfir Aberman, and Daniel Cohen-Or. Myvlm: in "Personalizing vlms for user-specific queries", arXiv preprint arXiv:2403.14599, 2024, to enable LVLMs recognize specific object instances and answer relevant questions accordingly. This suggests a great potential for deployment as visual assistants that can aid users in their daily lives. However, current LVLMs are designed to provide generic, user-independent responses and recognize objects at the category level. This limits their ability to refer to specific instances of categories by their unique names.

Existing approaches are computationally expensive and limit the model's ability to incrementally learn new personalized concepts. Indeed, existing approaches rely on time-consuming test-time training for each user and object, rendering them impractical.

SUMMARY OF THE INVENTION

The object of the present invention is to at least substantially remedy the above-mentioned drawbacks.

In this respect, the present disclosure relates to a novel free-training approach for detecting a personalized instance of an object in an image and for obtaining information on an input image.

More precisely, the invention proposes a method for identifying a personalized instance of a given object in a target image, comprising:

- obtaining a plurality of embedding vectors of objects from a mask of objects in a set of reference images associated with said objects, said embedding vectors being obtained from an image encoder trained within a foundation model, one embedding vector being associated with one reference image for one object,
- storing said plurality of embedding vectors of said objects with identifiers associated with said objects,
- determining that the target image comprises said personalized instance of said given object based on a similarity between:
- an embedding vector of said personalized instance of said object obtained using said trained foundation model, and
- the embedding vectors stored in said memory.

Correlatively, the present invention concerns a computer system for identifying a personalized instance of a given object in a target image, comprising:

- an image encoder trained within a foundation model for obtaining a plurality of embedding vectors of objects from a mask of objects in a set of reference images associated with said objects,
- a memory for storing said plurality of embedding vectors of said objects with identifiers associated with said objects,
- a similarity unit for determining that the target image comprises said personalized instance of said given object based on a similarity between :
- an embedding vector of said personalized instance of said object obtained using said trained foundation model, and
- the embedding vectors stored in said memory.

Therefore, the disclosed method for identifying a personalized instance of a given object in a target image is configured to recognize personalized instances of objects. It is configured to recognize an instance of object by its identifier, for example its used name (exemple my dog "Karl") instead of only recognizing an object by a category such as a cat or a dog. One main advantage is the training-free approach to recognize personalized instances of objects that have not been used during the training of the foundation model. The disclosed method therefore departs from the need to train and rely on the existing capabilities of vision foundation models to facilitate the task of personalizing vision language models.

The present method builds upon the strengths of pre-trained vision foundation models, the emerging capabilities of LLMs in in-context learning and retrieval-augmented generation. In one embodiment, the training-free approach localizes instances using open-world object detectors and stores reference instance-level features in memory banks, alongside their name, for instance personal names, (identifier) and optionally their context. During inferences, the memory is queried to retrieve the feature embeddings. Storing the feature embeddings additionally allows avoiding privacy concerns derived from training on user images.

According to some embodiments, the mask of each object is obtained by using an open vocabulary segmentation network.

From a reference image or few reference images of the object, the present invention can leverage open world detectors such as GroundingDINO (see reference [7]) to detect the object that the user is introducing for personalization later. A memory containing embedding vectors of that object can then be created by extracting patches representation of the bounding box features, using an encoder within a foundation model which has been previously trained on images other than the reference images comprising the personalized instance.

DINOv2 (see reference [5]) can be used for extracting expressive features that are capable of discriminating instances of objects from the same categories.

According to some embodiments, said mask is based on a semantic category of said object.

According to some embodiments, the mask can be obtained by manual annotation of a specific instance of an object.

According to some embodiments, obtaining an embedding vector of objects from a mask of the objects in a set of reference images comprises:

- average pooling of patches falling within said mask obtained by said trained foundation model for each of said objects for each image of the set of reference images.

According to some embodiments, the method further comprises,

- concatenating the embedding vectors obtained by average pooling for each object in each image to obtain a single embedding vector by object comprising for each object the embedding vectors of the object for each reference image.

According to some embodiments, determining that a target image comprises a personalized instance of said given object based on a similarity between

- an embedding vector of said personalized instance of said object obtained using said trained foundation model, and
- the embedding vectors stored in said memory
  comprises
- obtaining an embedding vector by average pooling of patches falling within the mask and obtained by said trained foundation model for each of said objects for said target image,
- retrieving the single embedding vector comprising the most similar embedding vector to the embedding vector obtained by average pooling of patches for a given object i of said target image
- determining that an object i of said target image is a personalized instance of an object j of said reference images if :

$$max_{l=1,..,N}\left(sim\left(e_j^l, e_{o_i}\right)\right) > \tau$$

Wherein N is the number of reference images,

$e_{o_i}$ is the embedding vector obtained by average pooling of patches obtained by said trained foundation model for each of said objects for said target image,

$e_j^l$ is the embedding vector obtained by average pooling of patches for a given object j of a reference image.

According to some embodiments, the threshold is adjusted for an object i by:

- computing a distribution of distances for embedding vectors $e_i^l$ for the reference images associated with an object i,

- calculating the mean deviation $\mu_i$ and the standard deviation $\sigma_i$ of said distribution,
- setting the threshold for an object i to either

$$\tau_i = \mu_i - \sigma_i/2 \text{ or}$$

$$\tau_i = \mu_i - \alpha(\sigma_i/2)$$

According to a second aspect, the present invention concerns also a method for obtaining information on an input image, said method being implemented by a computer and comprising

- inputting to a Large Vision Language Model (LVLM):
  - a visual prompting of at least one personalized instance of an object detected in an input image by a method according to the present disclosure and associated with said object identifier and said context,
  - the identifier of the object indicated by said visual prompting,
  - instructions to generate captions or respond to a query,
- obtaining said information, from said LVLM, according to the instructions, said information being:
  - a personalized caption on said at least personalized instance of said object indicated by said visual prompting or
  - a response to a query on said personalized instance of said object indicated by said visual prompting.

Correlatively, the present invention concerns a computer system for obtaining information on an input image, comprising

- a Large Vision Language Model receiving as input,
- a visual prompting of at least one personalized instance of an object detected in an input image by a method according to the present disclosure and associated with said object identifier and said context,
- the identifier of the object indicated by said visual prompting,
- instructions to generate captions or respond to a query,

said Large Vision Language Model providing said information according to the instructions, said information being:

- a personalized caption on said at least personalized instance of said object indicated by said visual prompting or
- a response to a query on said personalized instance of said object indicated by said visual prompting.

According to some embodiments, in a non-limiting manner, the information can be classification information, or an alert. Indeed, according to the caption or to the response to the query, the images can be classified by personalized instance detected. Even for further classifications, for a personalized instance, the images can be classified by action for instance, or by location of the personalized instance, or any other classification of interest depending on the application of the method for instance, or on a type associated with the object.

Existing approaches of LVLM rely on training for a specific concept and personalized object during deployment time, diverting the LVLM from its original capabilities, and inuring a large compute cost making these solutions less attractable for the case they are intended to. Further, training for a specific object doesn't allow for adding other personalized objects and creates a specific version of the LVLM for that concept.

The present invention departs from the need to train and rely on the existing capabilities of vision foundation models to facilitate the task of personalizing vision language models. In an embodiment, the proposed method advantageously can comprise two main phases consisting

- In a personalized object introduction phase: an object is introduced for the first time with one or more reference images, name and optionally context information. Robust patch-level features are extracted and stored in memory.
- In a personalized inference, given an image, and optionally a question Q, object proposals are extracted and a retrieval module, or similarity module, is queried with the bounding box features. If a match is found, a visual prompt is generated such as a bounding box drawn around the matching object in a target image with a unique color and the LVLM is instructed to respond (either responding to a question or providing caption information) using the name (identifier) of the object and eventually the context information. If no match is found, the LVLM responds without further instructions. Instead of a visual prompt comprising a bounding box, a mask or other indication indicating which one is the personalized instance can be input as visual prompt to the LVLM.

In an embodiment, during deployment, the method checks if the objects stored in memory are present in the image, relieving the LVLM from the need to recognize object details and instead relying on stored features.

In an embodiment, advantageously, when an object instance is recognized, the present method can leverage the power of visual prompting by indicating via a visual prompt (an overlayed bounding box for instance) the name of the object present in the image.

In some embodiments, in-context information about the detected instances can be input to the LVLM to instruct the LVLM to follow a certain style when responding to a given user via in-context learning.

According to some embodiments, the method further comprises:

- generating an alert according to the response to the query or the content of the caption.

According to some embodiments, the method further comprises:

- classifying said images according to the personalized caption or to the response to said query.

According to another aspect, the present invention concerns also a method implemented by a computer, for analyzing images comprising:

- inputting to a Large Vision Language Model LVLM:
    - a visual prompting of at least one personalized instance of an object detected in an input image by a method according to the method according to the present disclosure and associated with said object identifier and said context,
    - the identifier of the object indicated by said visual prompting,
    - instructions to generate captions or respond to a query,
- obtaining, from said LVLM, according to the instructions, an analysis of the image related to said at least personalized instance of said object, said analysis comprising:
    - a personalized caption on said at least personalized instance of said object indicated by said visual prompting or
    - a response to a query on said personalized instance of said object indicated by said visual prompting.

According to another aspect, the present invention concerns a method implemented by a computer, for video monitoring of a personalized instance of an object detected in an input image of said video, said method comprising:

- inputting to a Large Vision Language Model LVLM:
    - a visual prompting of at least one personalized instance of an object detected in an input image by a method according to the present disclosure and associated with said object identifier and said context,
    - the identifier of the object indicated by said visual prompting,
    - instructions to generate captions or respond to a query,
- obtaining, from said LVLM, according to the instructions, an analysis of an action of said personalized instance of said object, said analysis comprising:
    - a personalized caption on said action of said at least personalized instance of said object indicated by said visual prompting or
    - a response to a query Q on said action of said personalized instance of said object indicated by said visual prompting.

According to another aspect, the present invention concerns a method implemented by a computer, for generating an alert related to a personalized instance of an object detected in an input image of said video, said method comprising

- inputting to a Large Vision Language Model LVLM:

  - a visual prompting of at least one personalized instance of an object detected in an input image by a method according to the present disclosure and associated with said object identifier and said context,
  - the identifier of the object indicated by said visual prompting,
  - instructions to generate captions or respond to a query,

- obtaining, from said LVLM, according to the instructions:

  - a personalized caption on said at least personalized instance of said object indicated by said visual prompting or
  - a response to a query on said personalized instance of said object indicated by said visual prompting,

- generating an alert according to the response to the query or the content of the caption.

According to another aspect, the present invention concerns a method implemented by a computer, for classifying images comprising a personalized instance of an object said method comprising

- inputting to a Large Vision Language Model LVLM:

  - a visual prompting of at least one personalized instance of an object detected in an input image by a method according to the present disclosure and associated with said object identifier and said context,
  - the identifier of the object indicated by said visual prompting,
  - instructions to generate captions or respond to a query,

- obtaining, from said LVLM, according to the instructions:

  - a personalized caption on said at least personalized instance of said object indicated by said visual prompting or
  - a response to a query on said personalized instance of said object indicated by said visual prompting.

- classifying said images according to the personalized caption or to the response to said query.

In a particular embodiment, the plurality of steps of the methods disclosed are determined by computer program instructions or are implemented by a silicon chip comprising transistors suitable for constituting logic gates of a hard-wired non-programmable logic.

Consequently, the invention also relates to a computer program on an information medium, this program being able to be implemented in a controller computer, this program including instructions suitable for implementing the steps of the methods as described above.

This program can use any programming language, and be in the form of source code, object code, or intermediate code between source code and object code, such as in a partially compiled form, or in any other desirable form.

The invention also relates to an information medium readable by a computer and including instructions for a computer program as mentioned above. The information medium can be any entity or device capable of storing the program. For example, the medium can include a storage means, such as a ROM, a non-volatile memory of flash type or else a magnetic recording means, for example a hard disk. Moreover, the information medium can be a transmissible medium such as an electrical or optical signal, which can be routed via an electrical or optical cable, by radio or by other means. The program according to the invention can in particular be downloaded over a network of Internet type. Alternatively, the information medium can be an integrated circuit into which the program is incorporated, the circuit being suitable for executing or being used in the execution of the method in question.

BRIEF DESCRIPTION OF THE DRAWINGS

Features, advantages, and technical and industrial significance of exemplary embodiments of the invention will be described below with reference to the accompanying drawings, in which like signs denote like elements, and wherein:

- FIG. 1 is a flowchart representing steps of a method of performing a training-free view features extraction of an object,
- FIG.2 is a flowchart representing steps of a method of performing personalized instance of object retrieval in an image,
- FIG.3 is a flowchart representing steps of a method of performing personalized caption generation on an object,
- FIG.4 illustrates the average weighted visual recognition accuracy as a function of number of reference images with two different set of reference images,
- FIG. 5a-5f illustrate pictures input to a prior art LLaVa model and to the present invention system for output comparisons,

- FIG. 6 illustrates an embodiment of a system implementing devices according to the present disclosure.

DETAILED DESCRIPTION OF EMBODIMENTS

In the description below, we disclose a method to perform personalized object detection and based on this personalized object detection, a method for answer or caption generation.

A three-stage pipeline is therefore disclosed, comprising:

- view extraction to extract robust object-level features from reference images and store them in a memory,
- personalized object retrieval to identify objects in a query image, and
- personalized answer generation or personalized captioning via visual prompting.

With reference to Figure 1, we will now describe the main steps of a method for training-free view extraction of features of a personalized instance of an object in an image.

A personalized instance of an object, also called a personalized object in the present specification, is an object which can be named by a user, for instance "the cat Garfield" or "the car of Simon", therefore not only "the cat" or "the car" and which can be recognized by a personal identifier, for instance given by a user, for instance "car XX of company YY". This is in opposition to an object recognized by its category, for instance car, cat, dog, house....

We consider a set P of all personalized objects p. Each object $p \in P$ is associated with a set of N reference images $\{I_p\}$.

Since the approach does not require a training phase, the number of reference images to be used can be challenged. Increasing the number of reference images improves performance, but experiments demonstrate that the model is already robust with only one reference image. Figure 4 illustrates the average weighted visual recognition accuracy as a function of number of reference images with two different set of reference images, MyVLM dataset and Yo'LLaVA dataset.

MyVLM dataset , Yo'LLaVA dataset and This-Is-My-Img datasets can be used as non limiting examples of reference images.

The method comprises a first step E10 of localizing objects in an image and extracting a mask for the objects which are localized. To this end, an open vocabulary segmentation network $F_{ext}$ can be used to extract object-level masks $S_p$ based on the object's semantic category $k_p$ :

$$S_p = F_{\text{ext}}(I_p, k_p)$$

In other embodiments, the masks can be obtained by manual annotation of a specific instance of an object.

By using open vocabulary segmentation network $F_{ext}$ to extract object-level masks, it enables to reduce the drawbacks of reference [1] which overfits to the background of each object in the reference images, particularly observed for training-based approaches.

In some embodiments, G-DINO (grounding DINO) (see reference [7]) can be used as an open vocabulary segmentation method.

In other embodiments, other methods such as G-SAM (grounded SAM) (see reference [10]) can be used.

For the MyVLM dataset, where the object names are generic, we can directly input them into the open-vocabulary detector.

For the Yo'LLaVA dataset, concept names do not indicate the semantic categories. To address this, we can use the following categories to cover the 40 objects in this dataset:

Cartoon Cat/Dog, Cartoon Man/Woman, Cat, Church, Cup, Dog, Face, Keyboard, Plush, Temple

Face is used for detecting humans, as matching during inference should better focus on facial features rather than clothing. Using Man/Woman would prompt the open-world detector to segment the entire person, including their clothing which might change for test images.

For the This-Is-My Img dataset, we can use the following categories to cover 13 objects in the dataset:

Bag/Bike, Dog, Car, Chair, Face, Hat, Keyboard, Shoes, Skateboard

In a second step E20, a foundation model or image encoder $F_{emb}$ to obtain patches is applied on the image $I_p$ over the region defined by the object-level mask $S_p$.

In some embodiments, CLIP (see reference [9]) or DINO (see refence [2]) can be used as foundation models. DINO shows better performances than CLIP, visual features of DINO being more discriminative and better suited for retrieval tasks. Between the two DINO variants (base and large), the larger version delivers slightly better performance, the difference is marginal indicating than any DINOv2 backbone can be deployed.

Vision-language like CLIP and Align (see reference [4]) map objects to higher-level semantics using contrastive pretraining. In contrast, self-supervised models like DINO detect variations among subjects within the same class, fostering recognition of distinct characteristics. Grounding DINO redefines object detection as phrase grounding, and SAM excels in image segmentation with large-scale training.

In a step E30, an embedding vector $e_p$ is obtained from object p by average pooling of patches falling within said mask and produced by the image encoder $F_{emb}$ on the image $I_p$ over the region defined by the object-level mask $S_p$:

$$e_p = AvgPool(F_{emb}(I_p), S_p) \in R^{D_h}$$

According to some embodiments, an embedding vector $e_p$ is obtained from object p by average pooling of patches falling within said mask using an object detection network.

In a step E40, considering the N reference images, all object embedding vectors $e_p^i$ can be vconcatenated for the object p pooled over the i-th reference image $I_p^i$. A matrix $E_p$ is obtained by this vconcatenation:

$$E_p = [e_p^{\mathbf{1}}, \ldots, e_p^N] \in R^{D_h \times N}$$

In other embodiments, rather than vconcatenating the embedding vectors into a vector of size N times D (where N is the number of reference views of the object and D is the length of the embedding vector $e_p$), all N embedding vectors can be kept, and stored in a matrix for convenience. In other embodiments, dictionaries or lists can be used for storing the embedding vectors $e_p$.

After the matrix is obtained, it is stored into a memory space, step E50, which thus comprises a set $\mathcal{M}$ of object-specific entries:

$$\mathcal{M} = \{(E_p, (n_p, c_p))\}_{p \in P}$$

Where $n_p$ is the identifier or the name of the personalized object $p$, and $c_p$ is the context of the object, which can contain prior knowledge such as characteristics, background story or even relation to other personalized objects.

When the number of personalized objects scales, the memory space can be easily converted into a vector database, where nearest neighbour approximate search is deployed to retrieve instances matching at given query, ensuring the efficiency and scalability of the present method.

With reference to Figure 2, we will now describe the main steps of a method of performing personalized instance of object retrieval in an image,

We consider that a memory comprises a set $\mathcal{M}$ of object-specific entries as disclosed in reference to figure 1. A target image $I$, also known as test image, is taken as input of the method which aims at determining that a personalized object is present in the provided target image $I$.

In a step S10, an object proposal method is used to generate a set of proposals $O$:

$$O = \{o_i\}_i = F_{\text{prop}}(I)$$

for potential object occurrences within the image $I$. This set of proposals can be a bounding box around an object. One or several objects $o_i$ can be detected in the test image.

In a step S20, a foundation model or image encoder $F_{emb}$ to obtain embedding vectors is applied on the image $I$ over the region defined by the object proposal method at object-level.

The foundation model used at step E20 is preferably the same foundation model as used in step E20.

In a step S30, an embedding vector $e_{o_i}$ is obtained from object $o_i$ by average pooling of patches falling within said mask and produced by the image encoder $F_{emb}$ on the image $I$ over the region defined by the object proposal method:

$$e_{o_i} = AvgPool(F_{\text{emb}}(I), o_i)$$

In a step S40, a similarity measure is performed. We assume that we have at our disposal the memory space containing the $\mathcal{M}$ object-specific entries as defined earlier. The similarity measure compares the embedding vector, for

each object $o_i$ detected in image , with the $\mathcal{M}$ embedding vectors of objects p. It retrieves the memory entry ($E_j$, ($n_j$, $c_j$)), among all the memory entries, for a matching object j among the p objects, which comprises the most similar embedding vector to $e_{o_i}$ embedding vector. An additional condition to this similarity matching can be:

$$\max\left(similarity\left(E_j, e_{o_i}\right)\right) = \max_{l=1,\ldots,N}\left(similarity\left(e_j^l, e_{o_i}\right)\right) > \tau$$

Any similarity measure, for instance cosine similarity, can be employed for this purpose.

The threshold $\tau$ can be constant, to identify all personalized objects. The objects proposal in which no matching object is found are discarded.

As can be seen, the present method enables the detection of multiple objects in a single image.

In some embodiments, the threshold $\tau$ can be equal to 0.75 in order to decide whether a personalized object is present in an image or not.

In some embodiments, the threshold $\tau$ can be adjusted for a given personalized object i. To this end, the distribution of distances is computed for the reference images of the object and the mean $\mu_i$ is calculated as well as the standard deviation $\sigma_i$ of the distribution. The threshold for object i is then given according to the following formula:

$$\tau_i = \mu_i - \sigma_i/2$$

Advantageously, the threshold can be adjusted to be stricter or looser by adding a scalar multiplier $\alpha$ as:

$$\tau_i = \mu_i - \alpha(\sigma_i/2)$$

At step S50, one or several personalized objects have been identified in image I. In some cases, no personalized object is identified.

With reference to figure 3, we will now describe the main steps of a method of performing personalized caption generation on an object or obtaining a personalized response to a query Q. One goal is to generate a personalized response or caption for all images containing a personalized object during inference, while producing a general caption or response for any other image that does not contain any of the personalized objects.

Once a personalized object (or several personalized objects) is identified at step S50, the following disclosed method will generate captions specifically about that object, or generate a response to a query, distinct from general captions or general response that a state-of-the-art Large Vision Language Model (LVLM) would produce without this personalized instance.

In a step M10, visual prompting for the LVLM is performed for inputting to the LVLM the personalized objects detected.

According to some embodiments, visual prompting can be performed by overlaying a bounding box on a personalized object detected.

According to some embodiments, visual prompting can be performed by inputting a mask of the personalized instance of the object of interest or by an indication (visual) of the personalized instance of the object of interest.

When several objects are detected, distinctive colours can be used (as bounding box) to differentiate the recognized objects.

In a step M20, visual prompting is given to the LVLM; For instance, the bounding box surrounding the personalised object is given as input to the LVLM. Instead of a visual prompt comprising a bounding box, a mask or other indication indicating which one is the personalized instance can be input as visual prompt to the LVLM. In addition, the LVLM receives from or queries the memory space to retrieve the identifier $n_j$ and the context information $c_j$ stored in memory space associated with the personalized object.

Based on this information, the LVLM responds to a query Q that has been asked, or if no query is provided, provides caption about the personalized instance of the recognized object(s), step M30.

The LVLM model brings a technical effect in the sense that it can process and integrate visual and textual information, requiring sophisticated architectures and training techniques to align these modalities within a shared representation space. LVLMs can reason about object relationships within an image and respond to questions or generate descriptions involving spatial, contextual, or conceptual reasoning. They can generate precise textual descriptions of images or create images from textual descriptions, integrating complex knowledge about objects, scenes, and their relationships. In medical diagnostic applications, LVLMs enable more natural and efficient user interactions with the system. They often deliver significant gains in accuracy and relevance in tasks like image classification, image retrieval, and content generation compared to traditional methods. Therefore, the contribution of LVLM together with the detection of personalized instance, can greatly improve the analysis of images, such as classification, alert generation for the personalized instance detected.

According to some embodiments, the following format can be given to the LVLM as prompts for responding to the specific question or providing captions.

in this image, the entity enclosed in a ’color’ box is called ‘NAME’
without mentioning the bounding box and its color, ’TASK’
[optional] give more details using the information from ’CONTEXT’

The ‘COLOR’ placeholder indicates the color of the bounding box overlaid on the image for the object ‘NAME’.

The ‘NAME’ placeholder specifies the instance name, which can be issued from the memory as being the identifier $n_j$.

The ’TASK’ placeholder can contain a specific task, such as a query Q.

Optionally the ’CONTEXT’ placeholder can contain the prior knowledge about the personalized object retrieved from the memory module, such as the context information $c_j$.

When multiple objects are detected in one test image, the query’s grammatical structure changes to a plural format, and the ‘COLOR’ and ’NAME’ placeholders contain multiple values separated by commas. The ’CONTEXT’ placeholder for each object is included in angle brackets and contains the ‘NAME’ for the corresponding instance.

As an example, the ’TASK’ placeholder can be any of the following prompts:

Personalized captioning: describe the details of ’NAME’
VQA: answer the following question about ‘NAME’.

As an illustration of the output of the LVLM, figure 5 shows a comparison of the training-free method as proposed in the present disclosure with original LLaVA captions.

When LLaVA doesn’t recognize an object from the given name in the query, it guesses, leading to hallucinations or incorrect statements. In contrast, the present method accurately identifies objects and uses in-context information to guide LLaVA in answering questions or providing details about the image, successfully incorporating in-context information and object appearance in the image.

According to some embodiments, the method further comprises:

- generating an alert according to the response to the query or the content of the caption.

According to some embodiments, the method further comprises:

- classifying said images according to the personalized caption or to the response to said query.

An alert can be generated when said generated caption or when said generated response contain some information that triggers the alert. In other words, an alert can be generated further to a triggering of some determined information present in the generated caption or in the generated response.

For instance, when the object is a car, an alert can be generated if the car is detected close to a determined location or place, or on a lane where it should not be. More precisely, if the specific instance of a car, such as the car of Mr X (for instance recognized by a specific attribute) is located in a place where it should not be located, an alert can be generated.

To this end, the present invention finds an application in assisting autonomous vehicles for instance.

Therefore, the present invention concerns also a method implemented by a computer, for generating an alert related to a personalized instance of an object detected in an input image of said video, said method comprising

- inputting to a Large Vision Language Model LVLM:
  - a visual prompting of at least one personalized instance of an object detected in an input image by a method according to the present disclosure and associated with said object identifier and said context,
  - the identifier of the object indicated by said visual prompting,
  - instructions to generate captions or respond to a query,
- obtaining, from said LVLM, according to the instructions:
  - a personalized caption on said at least personalized instance of said object indicated by said visual prompting or

- a response to a query (Q) on said personalized instance of said object indicated by said visual prompting,

- generating an alert according to the response to the query or the content of the caption.

The classification of images can be based on determined information of the generated caption the generated response. According to the caption or to the response to the query, the images can be classified by personalized instance detected. Even for further classifications, for a personalized instance, the images can be classified by action for instance, or by location of the personalized instance, or any other classification of interest depending on the application of the method for instance, or on a type associated with the object.

Therefore, the present invention concerns also a method implemented by a computer, for classifying images comprising a personalized instance of an object said method comprising

- inputting to a Large Vision Language Model LVLM:
  - a visual prompting of at least one personalized instance of an object detected in an input image by a method according to the present fisclosure and associated with said object identifier and said context,
  - the identifier of the object indicated by said visual prompting,
  - instructions to generate captions or respond to a query,
- obtaining, from said LVLM, according to the instructions:
  - a personalized caption on said at least personalized instance of said object indicated by said visual prompting or
  - a response to a query (Q) on said personalized instance of said object indicated by said visual prompting.
- classifying said images according to the personalized caption or to the response to said query.

The method disclosed on figure 3 can also be used for analyzing images and to this end can comprise

- inputting to a Large Vision Language Model LVLM:
  - a visual prompting of at least one personalized instance of an object detected in an input image by a method as disclosed in the present disclosure and associated with said object identifier and said context,
  - the identifier of the object indicated by said visual prompting,
  - instructions to generate captions or respond to a query,
- obtaining, from said LVLM, according to the instructions, an analysis of the image related to said at least personalized instance of said object, said analysis comprising:
  - a personalized caption on said at least personalized instance of said object indicated by said visual prompting or
  - a response to a query (Q) on said personalized instance of said object indicated by said visual prompting.

One application of the invention can also be video monitoring, for instance for assisting police staff for arresting determined persons, or for medical applications for determining specific pathologies.

Therefore, the method disclosed on figure 3 can also be used for video monitoring of a personalized instance of an object detected in an input image of said video, said method comprising:

- inputting to a Large Vision Language Model LVLM:
  - a visual prompting of at least one personalized instance of an object detected in an input image by a method as disclosed in the present disclosure and associated with said object identifier and said context,
  - the identifier of the object indicated by said visual prompting,
  - instructions to generate captions or respond to a query,
- obtaining, from said LVLM, according to the instructions, an analysis of an action of said personalized instance of said object, said analysis comprising:
  - a personalized caption on said action of said at least personalized instance of said object indicated by said visual prompting or

- a response to a query (Q) on said action of said personalized instance of said object indicated by said visual prompting.

Figures 5a to 5f show a comparison of the training-free method as proposed in the present disclosure with original LLaVA captions.

When LLaVA doesn't recognize an object from the given name in the query, it guesses, leading to hallucinations or incorrect statements. In contrast, the present method accurately identifies objects and uses in-context information to guide LLaVA in answering questions or providing details about the image, successfully incorporating in-context information and object appearance in the image.

On figures 5a, 5b, 5c, an illustration of inputting a question to the LVLM is shown. While the original model struggles with specific questions about named objects, the present method easily identifies the referred object.

Regarding figure 5a, the question Q input to the LVLM is: What is the most noticeable feature of the "espresso" cup ?"

The prior art model LLaVA outputs as response: "The most noticeable feature of the "espresso cup" is that it has a face drawn on it, giving it a unique and quirkly appearance".

The present invention outputs as response: "The most noticeable feature of the "espresso cup" in the image is its blue and white color scheme".

Regarding figure 5b, the question Q input to the LVLM is:"How tall or large is "shiba-sleep" ?"

The prior art model LLaVA outputs as response: "The term "Shiba sleep" is not a standard unit of measurement and does not provide a clear reference for size".

The present invention outputs as response: ""Shiba-Sleep" appears to be a large stuffed animal, possibility a dog given its size and shape".

Regarding figure 5c, the question Q input to the LVLM is:"What is "Casey's friend Marlan" doing?"

The prior art model LLaVA outputs as response: ""Casey's friend Marlan" is not visible on the image".

The present invention outputs as response: "He is wearing a brown jacket and a cap and appears to be looking to his right possibly observing the traffic or pedestrians".

On figures 5d, 5e, 5f, an illustration of caption generation is shown. The LVLM outputs captions on the input image comprising the personalized instance. The present method detects personalized objects and integrates prior knowledge in caption generation.

Regarding figure 5d, the prior art model LLaVA outputs as caption: "The image shows a wooden table with a few items on it, there is a mug with a skull design on it, placed towards the center of the table."

The present invention outputs as caption: ""The skulls mug" is a ceramic mug that was created in 2012, it is designed in a gothic style, featuring a skull motif'.

Regarding figure 5e, the prior art model LLaVA outputs as caption: "The image features an animated character with a blue skin tone. The character has a large round head with a prominent forehead and a small, round nose".

The present invention outputs as caption: "Wade is a water elemental. He is a fifeguard in the city od Elemental Heights, known for his empathic nature and his ability to take on other's troubles".

Regarding figure 5f, the prior art model LLaVA outputs as caption: "The image shows a person standing in a room with aa bed in the background. The individual appears to be a young woman with long hair".

The present invention outputs as caption: "the "Alex's everyday bag" appears to be a brown handbag with a distinctive pattern and a recognizable logo. It has a flap closure and a long strap".

Figure 6 represents an embodiment of a system according to an embodiment of the present invention. Said system is configured for implementing the methods described in reference to figures 1 to 3.

The system comprises a mask extractor MASK_EXT for extracting a mask on the objects of the reference images and on the target image. The mask extractor extracts object-level masks $S_p$based on the object's semantic category $k_p$. The mask extractor can be preferably an open vocabulary segmentation network $F_{ext}$.

In some embodiments, GroundedSAM can be chosen as the open vocabulary segmentation network $F_{ext}$.

In some embodiments, GroundingDINO can also be used as an open vocabulary segmentation network $F_{ext}$. In such an embodiment the mask can be chosen as the object bounding box.

The following tables illustrate the performances of the present method when using G-DINO, G-SAM open vocabulary segmentation network $F_{ext}$.

Table 1: visual recognition performance on My VLM and YoLLaVA datasets

| My VLM Dataset | | | | |
|---|---|---|---|---|
| | precision | accuracy | | |
| Method/Metric | | positive | negative | weighted |
| My VLM ref[1] | | 96,6 | 90,9 | 93,8 |
| Yo'LLaVA ref[8] | | 97 | 95,7 | 96,4 |
| invention (G-DINO) | 79,1 | 94,3 | 98,8 | 96,55 |
| invention (G-SAM) | 82,3 | 97,6 | 99 | 98,3 |
| Yo'LLaVA Dataset | | | | |
| Yo'LLaVA ref[8] | | 94,9 | 89,8 | 92,4 |
| invention (G-DINO) | 77 | 89,9 | 98,9 | 94,4 |
| invention (G-SAM) | 74,8 | 91 | 98,7 | 94,9 |

In table 1 above, we can compare the choice of an open-world object detector, G-DINO with the open-world semantic segmentation model, G-SAM for obtaining $F_{ext}$.

The results show that the present disclosed method outperforms previous methods in both cases. However, the more precise segmentation model, which extracts only patches of the object of interest, achieves on average the best accuracy. This improvement is more pronounced on the MyVLM dataset, where objects are less centered in the training views compared to the YoLLaVA dataset.

More precisely table 1 presents the performance of the present method compared to current methods, MyVLM and Yo'LLaVA, on their respective datasets. On MyVLM dataset, the present method improves both positive and negative accuracy, with an average improvement of 1.9 %. On Yo'LLaVA dataset, the present method significantly improves negative accuracy by 8.9 % while having a lower positive accuracy than Yo'LLaVA, resulting in an average improvement of 2.5 % on weighted accuracy, hence achieving best results on average. The present has a very low false positive rate, meaning avoiding incorrect recognition of personalized objects.

Table 2: Visual recognition accuracy (%) on This-Is-My-Img dataset

| This-Is-My-Img Dataset | | | | | |
|---|---|---|---|---|---|
| Method/Metric | Precision | accuracy | | | |
| | | positive | negative | fake | average |
| MyVLM | 8 | 88,1 | 4,7 | 54,2 | 49 |
| invention | 90,1 | 69 | 96 | 59,3 | 74,8 |

Next, we examine the performance on an introduced benchmark This-Is-My-Img dataset. Table 2 reports the recognition accuracy compared to MyVLM. MyVLM tends to provide positive responses to test images, resulting in very high positive accuracy but very low negative accuracy (<5 %). This indicates that MyVLM learns the scene in which the object occurs rather than the specific object, due to training on the CLIP cls token with limited training views.

The present disclosure shows striking robustness and balanced behavior on both positive and negative accuracy. Moreover, the high negative accuracy achieved by the present method compared to MyVLM highlights the advantages of patch-level over image-level features.

Even on the challenging fake images, the present method better identifies instances of personalized objects compared to MyVLM, achieving a 5 % improvement.

The system of the present disclosure comprises also an encoder $F_{emb}$ represented by ENC on figure 6 trained within a foundation model, for obtaining patches and further embedding vectors $E_p$ for the objects of the reference images and for obtaining embedding vectors for the objects of the target image.

In some embodiments, the foundation model is a self-supervised foundation model.

In some embodiments, DINOv2 can be used as the image encoder $F_{emb}$ to extract patch level features of the personalized objects. Image encoders trained with a self-supervised objective, such as DINOv2, produce distinctive features that improve the re-identification of personalized objects.

In some embodiments, CLIP can be used as image encoder.

Table 3 below compares the performances of CLIP Large with Dino V2 large and Dino V2 Base, using Yo'LLaVA Dataset:

Table 3: feature extraction comparison

| Yo'LLaVA Dataset | | | | |
|---|---|---|---|---|
| Method/Metric | Precision | Recall | | |
| | | Positive | Negative | Weighted |
| DINOv2(Large) | 74,8 | 91 | 98,7 | 94,9 |
| DINOv2 (Base) | 75,5 | 90,8 | 98,7 | 94,7 |
| CLIP (large) | 69 | 78,3 | 98,2 | 88,3 |

The system comprises also a memory MEM for storing the single embedding vectors $E_p$ of the objects of the reference image with identifiers associated with the objects.
The system comprises also a similarity unit SIM for determining that the target image comprises a personalized instance of a given object based on a similarity between

- an embedding vector $e_{o_i}$ of a personalized instance of an object obtained by the encoder $F_{emb}$.
- the single embedding vectors $E_p$ stored in said memory.

Typically a similarity unit can be a processor used for the similarity measures as well as for other controls of the method.
The system comprises also a large vision language model LVLM receiving as input

- a visual prompting of at least one personalized instance of an object detected in the target image by a method for identifying a personalized instance of a given object in a target image as disclosed in reference to figure 2 and associated with the object identifier $n_j$ and optionally the context $c_j$,
- the identifier $n_j$ of the object located indicated by the visual prompting,
- instructions to generate captions or respond to a query,

said Large Vision Language Model providing according to the instructions:

- a personalized caption on said at least personalized instance of said object indicated by said visual prompting or
- a response to a query (Q) on said personalized instance of said object indicated by said visual prompting.

The visual prompting can be a bounding box around the object or can be a mask or other indication for indicating which object is the personalized instance detected.
The method is generic regarding the choice of the LVLM model and allows for straightforward plug-and-play integration with any LVLM without tuning. In some embodiments, LLaVA can be used as LVLM model. More specifically LLaVA 1.6 with Mistral 7B (see reference [6]) can be used. In some embodiments, InternVL2-26B (see reference [3]) can be used.
The below table gives an overview of the performance of the present method compared with the existing methods.
The method's ability to answer questions about personalized objects using the Yo'LLaVA benchmark (see reference [8]) is evaluated. This visual questioning answering (VQA) benchmark includes 171 multiple choice questions (A/B) designed to assess a method's understanding of the visual appearance of personalized objects, their relationship to their environment, and reasoning about them.
Table below compares the results of the proposed disclosure with those from Yo'LLaVA. The best results of GPT4+Prompt and LLaVA+Prompt from Yo'LLaVA (see reference 25) with human-engineered prompts are also added.
The present disclosed method outperforms Yo'LLaVA without requiring training, special tokens, or modifications to the original LVLM. Additionally, because the present method localizes the personalized object within the image precisely, it does not suffer from performance degradation with increasing token length, unlike Yo'LLaVA.

Table 4: Visual Question Answering Accuracy (%) on YoLLaVA

| Method | VQA accuracy |
|---|---|
| GPT-4V + Prompt ref[8] | 93,6 |
| LLaVA ref[8] | 89,9 |
| LLaVA + Prompt | 92,5 |
| Yo'LLaVA | 92,9 |
| invention (LLaVA) | 93,4 |
| invention (InternVL) | 95,9 |

As can be seen, InternVL combined with the present method, specifically boost VQA (visual question accuracy) increasing the margin over GPT4V and human prompts.

Generating answers using a context pool with varied information, for instance monument history is inherently supported by the present disclosure.

Although the present disclosure refers to specific exemplary embodiments, modifications may be provided to these examples without departing from the general scope of the invention as defined by the claims. In particular, individual characteristics of the different illustrated/mentioned embodiments may be combined in additional embodiments. Therefore, the description and the drawings should be considered in an illustrative rather than in a restrictive sense.

References

[1] Yuval Alaluf, Elad Richardson, Sergey Tulyakov,Kfir Aberman, and Daniel Cohen-Or. Myvlm: Personalizing vlms for user-specific queries. arXiv preprint arXiv:2403.14599, 2024.

[2] Mathilde Caron, Hugo Touvron, Ishan Misra, Herv'e J'egou, Julien Mairal, Piotr Bojanowski, and Armand Joulin. Emerging properties in selfsupervised vision transformers. In Proceedings of the IEEE/CVF international conference on computer vision, pages 9650-9660, 2021.

[3] Zhe Chen, Jiannan Wu, Wenhai Wang, Weijie Su, Guo Chen, Sen Xing, Muyan Zhong, Qinglong Zhang, Xizhou Zhu, Lewei Lu, et al. Internvl: Scaling up vision foundation models and aligning for generic visual-linguistic tasks. In Proceedings of the IEEE/CVF Conference on Computer Vision and Pattern Recognition, pages 24185-24198, 2024.

[4] Chao Jia, Yinfei Yang, Ye Xia, Yi-Ting Chen, Zarana Parekh, Hieu Pham, Quoc Le, Yun-Hsuan Sung, Zhen Li, and Tom Duerig. Scaling up visual and vision-language representation learning with noisy text supervision. In International conference on machine learning, pages 4904-4916. PMLR,2021.

[5] Alexander Kirillov, Eric Mintun, Nikhila Ravi,Hanzi Mao, Chloe Rolland, Laura Gustafson, Tete Xiao, Spencer Whitehead, Alexander C Berg, Wan Yen Lo, et al. Segment anything. In Proceedings of the IEEE/CVF International Conference on Computer Vision, pages 4015-4026, 2023.

[6] Haotian Liu, Chunyuan Li, Yuheng Li, Bo Li,Yuanhan Zhang, Sheng Shen, and Yong Jae Lee Llava-next: Improved reasoning, ocr, and worldknowledge, 2024.

[7] Shilong Liu, Zhaoyang Zeng, Tianhe Ren, Feng Li, Hao Zhang, Jie Yang, Qing Jiang, Chunyuan Li, Jianwei Yang, Hang Su, et al. Grounding dino: Marrying dino with grounded pre-training for open-set object detection. arXiv preprint arXiv:2303.05499, 2023.

[8] Thao Nguyen, Haotian Liu, Yuheng Li, Mu Cai, Utkarsh Ojha, and Yong Jae Lee. Yo'llava: Your personalized language and vision assistant. arXiv preprint arXiv:2406.09400, 2024.

[9] Alec Radford, Jong Wook Kim, Chris Hallacy, Aditya Ramesh, Gabriel Goh, Sandhini Agarwal, Girish Sastry, Amanda Askell, Pamela Mishkin, Jack Clark, et al. Learning transferable visual models from natural language supervision. In International conference on machine learning, pages 8748-8763. PMLR, 2021.

[10] Tianhe Ren, Shilong Liu, Ailing Zeng, Jing Lin, Kunchang Li, He Cao, Jiayu Chen, Xinyu Huang, Yukang Chen, Feng Yan, et al. Grounded sam: Assembling open-world models for diverse visual tasks. arXiv preprint arXiv:2401.14159, 2024.

## Claims

1. A method for identifying a personalized instance of a given object in a target image ($I$), comprising:

   - obtaining a plurality of embedding vectors ($e_p$) of objects from a mask of objects in a set of reference images associated with said objects, said embedding vectors ($e_p$) being obtained from an image encoder trained within a foundation model, one embedding vector being associated with one reference image for one object,
   - storing said plurality of embedding vectors ($e_p$) of said objects with identifiers associated with said objects,
   - determining that the target image ($I$) comprises said personalized instance of said given object based on a similarity between
   - an embedding vector ($e_{o_i}$) of said personalized instance of said object obtained using said trained foundation model, and
   - the embedding vectors ($e_p$) stored in said memory.

2. The method of claim 1 wherein the mask of each object is obtained by using an open vocabulary segmentation network.

3. The method of claim 2 wherein said mask is based on a semantic category of said object.

4. The method according to any of claims 1 to 3 wherein obtaining an embedding vector ($e_p$) of objects from a mask of the objects in a set of reference images comprises:

   - average pooling of patches falling within said mask, obtained by said trained foundation model for each of said objects for each image of the set of reference images.

5. The method of claim 4 further comprising:

   - concatenating the embedding vectors ($e_p$) obtained by average pooling for each object in each image to obtain a single embedding vector ($E_p$) by object comprising for each object the embedding vectors ($e_p$) of the object for each reference image.

6. The method according to any of claim 5 wherein determining that a target image ($I$) comprises a personalized instance of said given object based on a similarity between

   - an embedding vector ($e_{o_i}$) of said personalized instance of said object obtained using said trained foundation model, and
   - the embedding vectors ($e_p$) stored in said memory comprises
   - obtaining an embedding vector ($e_{o_i}$) by average pooling of patches obtained by said trained foundation model for each of said objects for said target image,
   - retrieving the single embedding vector ($E_j$) comprising the most similar embedding vector ($e_j$) to the embedding vector ($e_{o_i}$) obtained by average pooling of patches for a given object i of said target image
   - determining that an object i of said target image is a personalized instance of an object j of said reference images if :

$$max_{l=1,..,N}\left(sim\left(e_j^l, e_{o_i}\right)\right) > \tau$$

Wherein N is the number of reference images,

$e_{o_i}$ is the embedding vector obtained by average pooling of patches obtained by said trained foundation model for each of said objects i for said target image,

$e_j^l$ is the embedding vector obtained by average pooling of patches for a given object j of a reference image

($I$).

**7.** The method of claim 6 wherein the threshold $\tau$ is adjusted for an object i by:

- computing a distribution of distances for embedding vectors ( $e_i^l$ ) for the reference images associated with an object i,
- calculating the mean deviation ($\mu_i$)and the standard deviation ($\sigma_i$) of said distribution,
- setting the threshold for an object i to either

$$\tau_i = \mu_i - \sigma_i/2 \text{ or}$$

$$\tau_i = \mu_i - \alpha(\sigma_i/2)$$

**8.** A method for obtaining information on an input image, said method being implemented by a computer and comprising

- inputting to a Large Vision Language Model LVLM:

  - a visual prompting of at least one personalized instance of an object detected in an input image by a method according to any of claims 1 to 7 and associated with said object identifier and said context,
  - the identifier of the object indicated by said visual prompting,
  - instructions to generate captions or respond to a query,

- obtaining said information, from said LVLM, according to the instructions, said information being:

  - a personalized caption on said at least personalized instance of said object indicated by said visual prompting or
  - a response to a query (Q) on said personalized instance of said object indicated by said visual prompting.

**9.** The method of claim 8 wherein said information is a classification information or an alert.

**10.** A method according to claim 8 further comprising:

- generating an alert according to the response to the query or the content of the caption.

**11.** A method according to claim 8 further comprising:

- classifying said images according to the personalized caption or to the response to said query.

**12.** A computer system for identifying a personalized instance of a given object in a target image, comprising:

- an image encoder trained within a foundation model for obtaining a plurality of embedding vectors ($e_p$) of objects from a mask of objects in a set of reference images associated with said objects,
- a memory for storing said plurality of embedding vectors ($e_p$) of said objects with identifiers associated with said objects,
- a similarity unit for determining that the target image comprises said personalized instance of said given object based on a similarity between
- an embedding vector ($e_{o_i}$) of said personalized instance of said object obtained using said trained foundation model, and
- the embedding vectors ($e_p$) stored in said memory.

**13.** A computer system for obtaining information on an input image, comprising

- a Large Vision Language Model receiving as input,
- a visual prompting of at least one personalized instance of an object detected in an input image by a method according to any of claims 1 to 7 and associated with said object identifier and said context,

- the identifier of the object indicated by said visual prompting,
- instructions to generate captions or respond to a query,

said Large Vision Language Model providing said information according to the instructions, said information being:

- a personalized caption on said at least personalized instance of said object indicated by said visual prompting or
- a response to a query (Q) on said personalized instance of said object indicated by said visual prompting.

**14.** A computer program set including instructions for executing the steps of the method of any one of claims 1 to 11 when said program set is executed by at least one computer.

**15.** A recording medium readable by at least one computer and having recorded thereon at least one computer program including instructions for executing the steps of the method of any one of claims 1 to 11.

**Amended claims in accordance with Rule 137(2) EPC.**

**1.** A method for identifying a personalized instance of a given object in a target image (I), comprising:

- obtaining a plurality of embedding vectors ($e_p$) of objects from a mask of objects in a set of reference images associated with said objects, said embedding vectors ($e_p$) being obtained from an image encoder trained within a foundation model, one embedding vector being associated with one reference image for one object,
- storing said plurality of embedding vectors ($e_p$) of said objects with identifiers associated with said objects,
- determining that the target image (I) comprises said personalized instance of said given object based on a similarity between
- an embedding vector ($e_{oi}$) of said personalized instance of said object obtained using said trained foundation model, and
- the embedding vectors ($e_p$) stored in said memory

**2.** The method of claim 1 wherein the mask of each object is obtained by using an open vocabulary segmentation network.

**3.** The method of claim 2 wherein said mask is based on a semantic category of said object.

**4.** The method according to any of claims 1 to 3 wherein obtaining an embedding vector ($e_p$) of objects from a mask of the objects in a set of reference images comprises:

- average pooling of patches falling within said mask, obtained by said trained foundation model for each of said objects for each image of the set of reference images.

**5.** The method of claim 4 further comprising:

- concatenating the embedding vectors ($e_p$) obtained by average pooling for each object in each image to obtain a single embedding vector ($E_p$) by object comprising for each object the embedding vectors ($e_p$) of the object for each reference image.

**6.** The method according to any of claim 5 wherein determining that a target image (I) comprises a personalized instance of said given object based on a similarity between

- an embedding vector ($e_{oi}$) of said personalized instance of said object obtained using said trained foundation model, and
- the embedding vectors ($e_p$) stored in said memory

comprises

- obtaining an embedding vector ($e_{oi}$) by average pooling of patches obtained by said trained foundation model for each of said objects for said target image,
- retrieving the single embedding vector ($E_j$) comprising the most similar embedding vector ($e_j$) to the embedding vector ($e_{oi}$) obtained by average pooling of patches for a given object i of said target image

- determining that an object i of said target image is a personalized instance of an object j of said reference images if :

$$max_{l=1,..,N}\left(sim\left(e_j^l, e_{o_i}\right)\right) > \tau$$

Wherein N is the number of reference images,
$e_{o_i}$ is the embedding vector obtained by average pooling of patches obtained by said trained foundation model for each of said objects i for said target image,
$e_j^l$ is the embedding vector obtained by average pooling of patches for a given object j of a reference image (l).

**7.** The method of claim 6 wherein the threshold $\tau$ is adjusted for an object i by:

- computing a distribution of distances for embedding vectors ( $e_i^l$ ) for the reference images associated with an object i,
- calculating the mean deviation ($\mu_i$)and the standard deviation ($\sigma_i$) of said distribution,
- setting the threshold for an object i to either
- $\tau_i = \mu_i - \sigma_i/2$ or
- $\tau_i = \mu_i - \alpha(\sigma_i/2)$

**8.** A method for obtaining information on an input image, said method being implemented by a computer and comprising

- inputting to a Large Vision Language Model LVLM:

  - a visual prompting of at least one personalized instance of an object detected in an input image by a method according to any of claims 1 to 7 and associated with said object identifier and said context,
  - the identifier of the object indicated by said visual prompting,
  - instructions to generate captions or respond to a query,

- obtaining said information, from said LVLM, according to the instructions, said information being:

  - a personalized caption on said at least personalized instance of said object indicated by said visual prompting or
  - a response to a query (Q) on said personalized instance of said object indicated by said visual prompting.

**9.** The method of claim 8 wherein said information is a classification information or an alert.

**10.** A method according to claim 8 further comprising:

- generating an alert according to the response to the query or the content of the caption.

**11.** A method according to claim 8 further comprising:

- classifying said images according to the personalized caption or to the response to said query.

**12.** A computer system for identifying a personalized instance of a given object in a target image, comprising:

- an image encoder trained within a foundation model for obtaining a plurality of embedding vectors ($e_p$) of objects from a mask of objects in a set of reference images associated with said objects,
- a memory for storing said plurality of embedding vectors ($e_p$) of said objects with identifiers associated with said objects,
- a similarity unit for determining that the target image comprises said personalized instance of said given object based on a similarity between
- an embedding vector ($e_{oi}$) of said personalized instance of said object obtained using said trained foundation model, and
- the embedding vectors ($e_p$) stored in said memory.

**13.** A computer system for obtaining information on an input image, comprising

- a Large Vision Language Model receiving as input,
- a visual prompting of at least one personalized instance of an object detected in an input image by a method according to any of claims 1 to 7 and associated with said object identifier and said context,
- the identifier of the object indicated by said visual prompting,
- instructions to generate captions or respond to a query,

said Large Vision Language Model providing said information according to the instructions, said information being:

- a personalized caption on said at least personalized instance of said object indicated by said visual prompting or
- a response to a query (Q) on said personalized instance of said object indicated by said visual prompting.

**14.** A computer program set including instructions for executing the steps of the method of any one of claims 1 to 11 when said program set is executed by at least one computer.

**15.** A recording medium readable by at least one computer and having recorded thereon at least one computer program including instructions for executing the steps of the method of any one of claims 1 to 11.

**1.** A method for identifying a personalized instance of a given object in a target image (I), comprising:

- obtaining a plurality of embedding vectors ($e_p$) of objects from a mask of objects in a set of reference images associated with said objects, said embedding vectors ($e_p$) being obtained from an image encoder trained within a foundation model, one embedding vector being associated with one reference image for one object,
- storing said plurality of embedding vectors ($e_p$) of said objects with identifiers associated with said objects,
- determining that the target image (I) comprises said personalized instance of said given object based on a similarity between
- an embedding vector ($e_{oi}$) of said personalized instance of said object obtained using said trained foundation model, and
- the embedding vectors ($e_p$) stored in said memory,

wherein obtaining an embedding vector ($e_p$) of objects from a mask of the objects in a set of reference images comprises average pooling of patches falling within said mask, obtained by said trained foundation model for each of said objects for each image of the set of reference images and
wherein determining that the target image (I) comprises said personalized instance of said given object comprises:

- obtaining an embedding vector ($e_{oi}$) by average pooling of patches obtained by said trained foundation model for each of said objects for said target image,
- concatenating the embedding vectors ($e_p$) obtained by average pooling for each object in each image to obtain a single embedding vector ($E_p$) by object comprising for each object the embedding vectors ($e_p$) of the object for each reference image.
- retrieving the single embedding vector ($E_j$) comprising the most similar embedding vector ($e_j$) to the embedding vector ($e_{oi}$) obtained by average pooling of patches for a given object i of said target image
- determining that an object i of said target image is a personalized instance of an object j of said reference images if :

$$max_{l=1,..,N}\left(sim\left(e_j^l, e_{o_i}\right)\right) > \tau$$

Wherein N is the number of reference images,
$e_{o_i}$ is the embedding vector obtained by average pooling of patches obtained by said trained foundation model for each of said objects i for said target image,

$e_j^l$ is the embedding vector obtained by average pooling of patches for a given object j of a reference image ($I$).

**2.** The method of claim 1 wherein the mask of each object is obtained by using an open vocabulary segmentation network.

**3.** The method of claim 2 wherein said mask is based on a semantic category of said object.

**4.** The method of any of claims 1 to 3 wherein the threshold $\tau$ is adjusted for an object i by:

- computing a distribution of distances for embedding vectors ( $e_i^l$ ) for the reference images associated with an object i,
- calculating the mean deviation ($\mu_i$)and the standard deviation ($\sigma_i$) of said distribution,
- setting the threshold for an object i to either
-

$$\tau_i = \mu_i - \sigma_i/2$$

or
-

$$\tau_i = \mu_i - \alpha(\sigma_i/2)$$

**5.** A method for obtaining information on an input image, said method being implemented by a computer and comprising

- inputting to a Large Vision Language Model LVLM:

  - a visual prompting of at least one personalized instance of an object detected in an input image by a method according to any of claims 1 to 4 and associated with said object identifier and said context,
  - the identifier of the object indicated by said visual prompting,
  - instructions to generate captions or respond to a query,

- obtaining said information, from said LVLM, according to the instructions, said information being:

  - a personalized caption on said at least personalized instance of said object indicated by said visual prompting or
  - a response to a query (Q) on said personalized instance of said object indicated by said visual prompting.

**6.** The method of claim 5 wherein said information is a classification information or an alert.

**7.** A method according to claim 5 further comprising:

- generating an alert according to the response to the query or the content of the caption.

**8.** A method according to claim 5 further comprising:

- classifying said images according to the personalized caption or to the response to said query.

**9.** A computer system for identifying a personalized instance of a given object in a target image, comprising:

- an image encoder trained within a foundation model for obtaining a plurality of embedding vectors ($e_p$) of objects from a mask of objects in a set of reference images associated with said objects,
- a memory for storing said plurality of embedding vectors ($e_p$) of said objects with identifiers associated with said objects,
- a similarity unit for determining that the target image comprises said personalized instance of said given object based on a similarity between

- an embedding vector ($e_{oi}$) of said personalized instance of said object obtained using said trained foundation model, and
- the embedding vectors ($e_p$) stored in said memory.

wherein obtaining an embedding vector ($e_p$) of objects from a mask of the objects in a set of reference images comprises average pooling of patches falling within said mask, obtained by said trained foundation model for each of said objects for each image of the set of reference images and
wherein determining that the target image ($I$) comprises said personalized instance of said given object comprises:

- obtaining an embedding vector ($e_{oi}$) by average pooling of patches obtained by said trained foundation model for each of said objects for said target image,
- concatenating the embedding vectors ($e_p$) obtained by average pooling for each object in each image to obtain a single embedding vector ($E_p$) by object comprising for each object the embedding vectors ($e_p$) of the object for each reference image.
- retrieving the single embedding vector ($E_j$) comprising the most similar embedding vector ($e_j$) to the embedding vector ($e_{oi}$) obtained by average pooling of patches for a given object i of said target image
- determining that an object i of said target image is a personalized instance of an object j of said reference images if :

$$max_{l=1,..,N}\left(sim\left(e_j^l, e_{o_i}\right)\right) > \tau$$

Wherein N is the number of reference images,
$e_{o_i}$ is the embedding vector obtained by average pooling of patches obtained by said trained foundation model for each of said objects i for said target image,
$e_j^l$ is the embedding vector obtained by average pooling of patches for a given object j of a reference image ($l$).

**10.** A computer system for obtaining information on an input image, comprising

- a Large Vision Language Model receiving as input,
- a visual prompting of at least one personalized instance of an object detected in an input image by a method according to any of claims 1 to 4 and associated with said object identifier and said context,
- the identifier of the object indicated by said visual prompting,
- instructions to generate captions or respond to a query,

said Large Vision Language Model providing said information according to the instructions, said information being:

- a personalized caption on said at least personalized instance of said object indicated by said visual prompting or
- a response to a query (Q) on said personalized instance of said object indicated by said visual prompting.

**11.** A computer program set including instructions for executing the steps of the method of any one of claims 1 to 8 when said program set is executed by at least one computer.

**12.** A recording medium readable by at least one computer and having recorded thereon at least one computer program including instructions for executing the steps of the method of any one of claims 1 to 8.

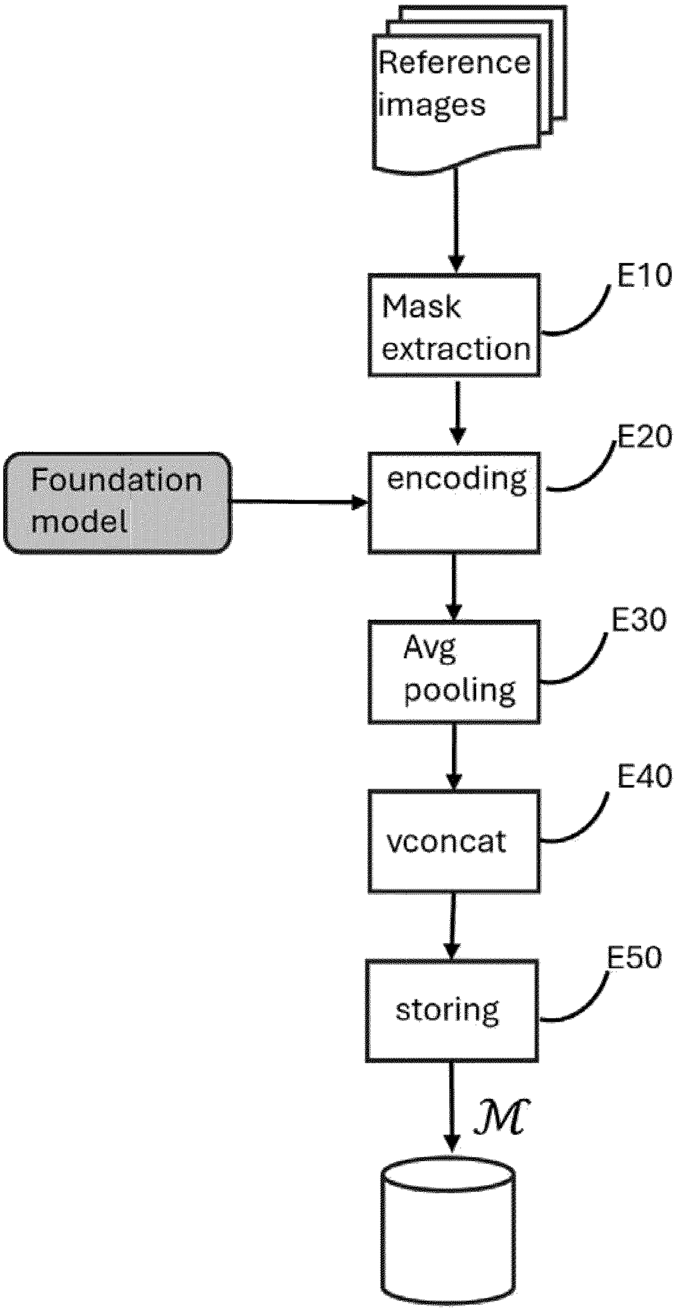
Reference images
Mask extraction
E10
Foundation model
encoding
E20
Avg pooling
E30
vconcat
E40
storing
E50
$\mathcal{M}$

FIG.1

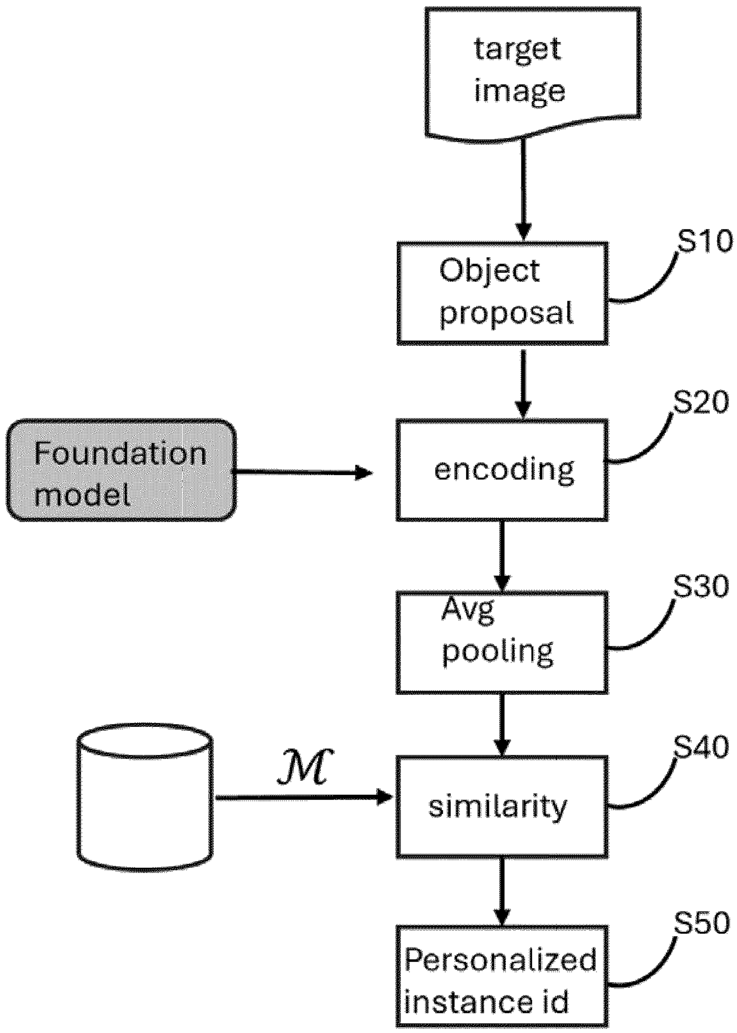
target image
Object proposal
S10
Foundation model
encoding
S20
Avg pooling
S30
$\mathcal{M}$
similarity
S40
Personalized instance id
S50

FIG.2

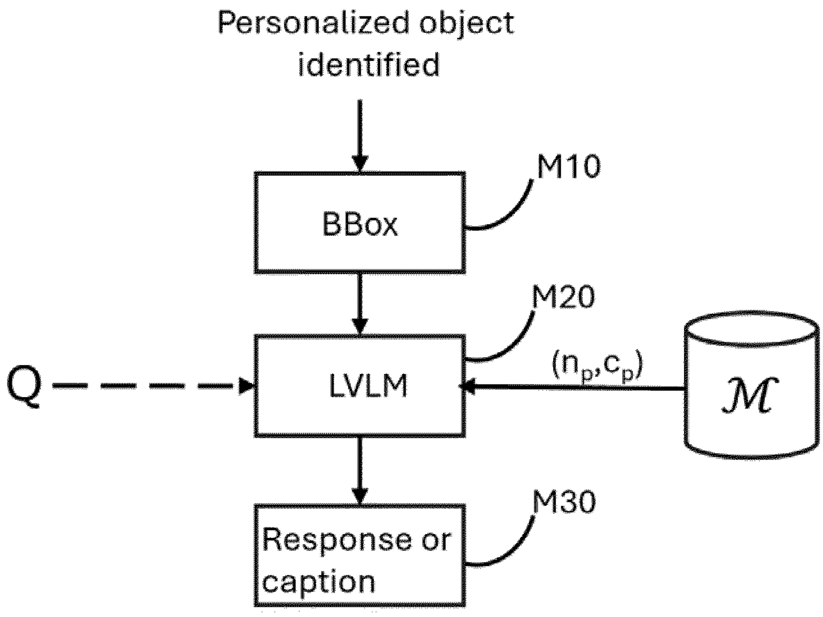
Personalized object identified
M10
BBox
M20
Q
LVLM
($n_p$,$c_p$)
$\mathcal{M}$
M30
Response or caption

FIG.3

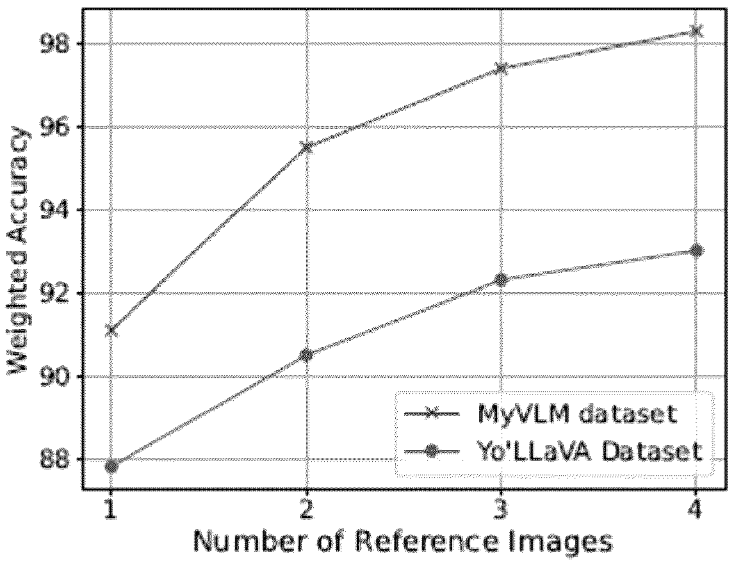
98
96
94
92
90
88
Weighted Accuracy
1
2
3
4
Number of Reference Images
MyVLM dataset
Yo'LLaVA Dataset

FIG.4

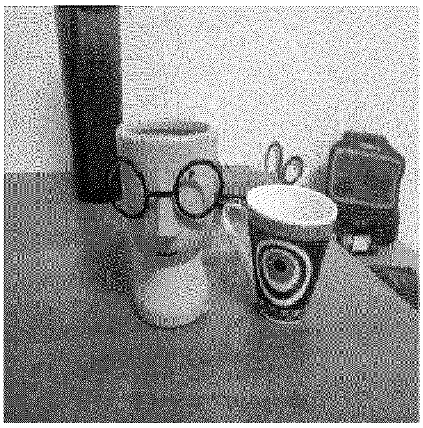

FIG.5A

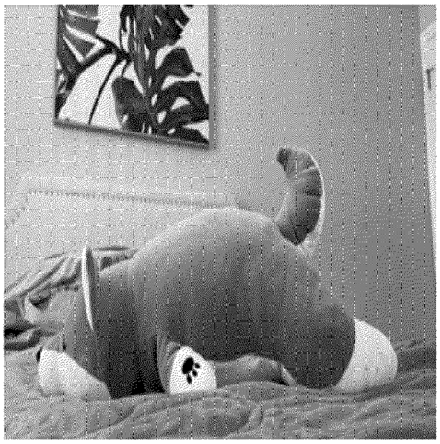

FIG.5B

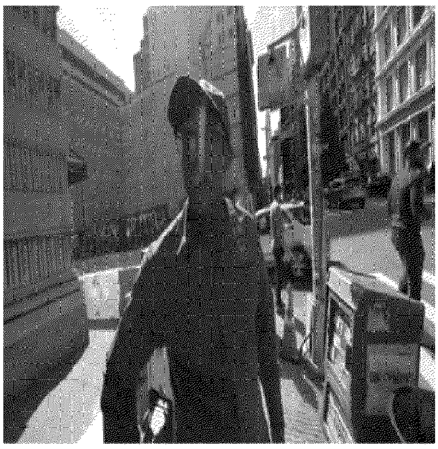

FIG.5C

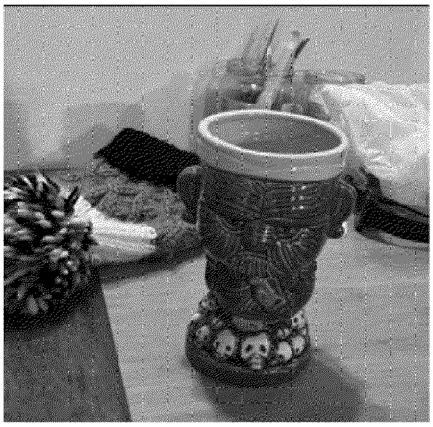

FIG.5D

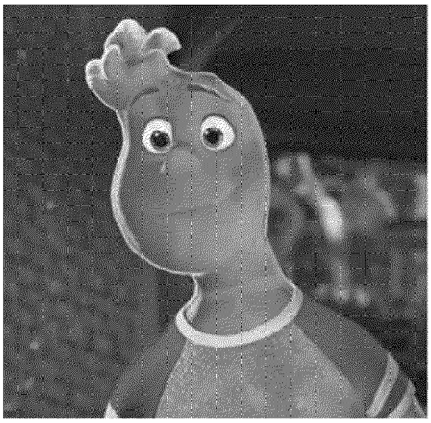

FIG.5E

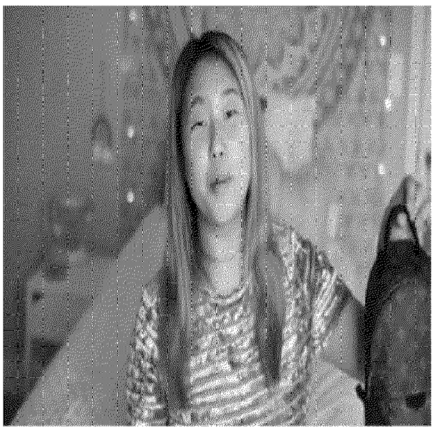

FIG.5F

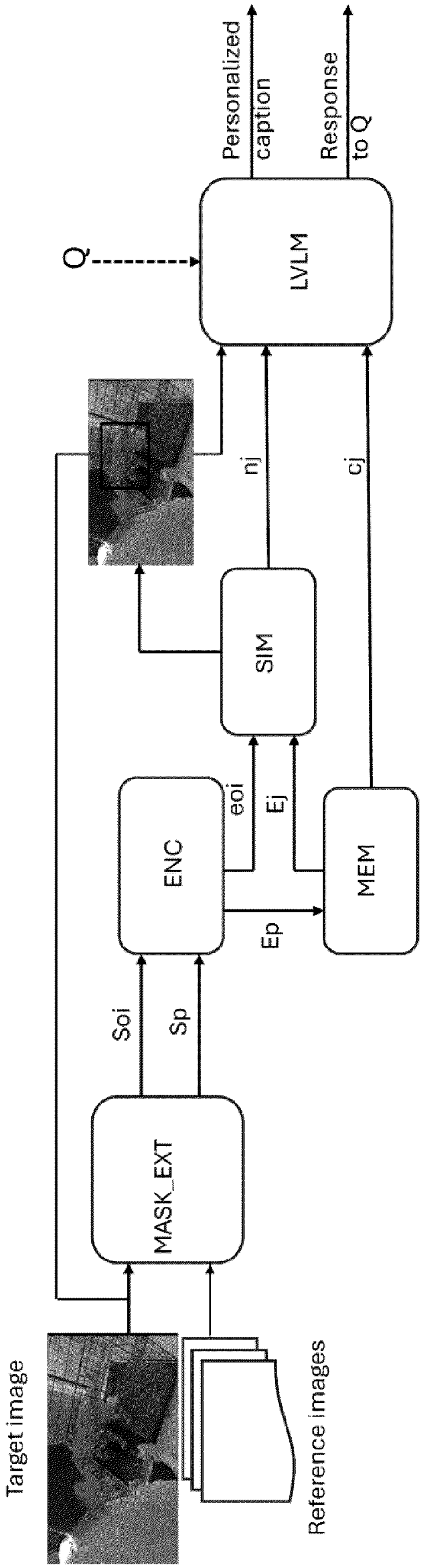
Target image
Reference images
MASK_EXT
Soi
Sp
ENC
eoi
Ej
Ep
MEM
SIM
nj
cj
Q
LVLM
Personalized caption
Response to Q

FIG.6

Europäisches Patentamt
European Patent Office
Office européen des brevets

# EUROPEAN SEARCH REPORT

Application Number
EP 25 15 0981

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Zhang Tao ET AL: "OMG-LLaVA: Bridging Image-level, Object-level, Pixel-level Reasoning and Understanding", arXiv.org, 1 October 2024 (2024-10-01), pages 1-24, XP093285481, Retrieved from the Internet: URL:https://arxiv.org/pdf/2406.19389 [retrieved on 2025-06-17] | 1-5,8-15 | INV. G06V10/764 G06V10/82 G06V20/70 |
| A | * section 3.2 * * figure 4 * * figure 5 * ----- | 6,7 | |
| L | Radford Alec ET AL: "Learning Transferable Visual Models From Natural Language Supervision", 38th International Conference on Machine Learning, PMLR 139, 2021, 18 July 2021 (2021-07-18), pages 1-16, XP093287623, Retrieved from the Internet: URL:https://proceedings.mlr.press/v139/radford21a/radford21a.pdf [retrieved on 2025-06-17] * section 2 * ----- | 1-5,8-15 | TECHNICAL FIELDS SEARCHED (IPC) |
| A | Pham Chau ET AL: "Personalized Large Vision-Language Models", arXiv.org, 23 December 2024 (2024-12-23), pages 1-16, XP093285444, Retrieved from the Internet: URL:https://arxiv.org/pdf/2412.17610 [retrieved on 2025-06-17] * the whole document * ----- | 1-15 | G06V |
| | -/-- | | |

The present search report has been drawn up for all claims

| Place of search | Date of completion of the search | Examiner |
|---|---|---|
| The Hague | 18 June 2025 | Angelopoulou, Maria |

1

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.....................................................................
& : member of the same patent family, corresponding document

EPO FORM 1503 03.82 (P04C01)

Europäisches Patentamt
European Patent Office
Office européen des brevets

# EUROPEAN SEARCH REPORT

Application Number
EP 25 15 0981

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | Haoran Hao ET AL: "Retrieval-Augmented Personalization for Multimodal Large Language Models", arXiv.org, 18 November 2024 (2024-11-18), pages 1-26, XP093285469, Retrieved from the Internet: URL:https://arxiv.org/pdf/2410.13360v2 [retrieved on 2025-06-17] * the whole document * ----- | 1-15 | |

TECHNICAL FIELDS SEARCHED (IPC)

The present search report has been drawn up for all claims

1

| Place of search | Date of completion of the search | Examiner |
|---|---|---|
| The Hague | 18 June 2025 | Angelopoulou, Maria |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

page 2 of 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- **YUVAL ALALUF** ; **ELAD RICHARDSON** ; **SERGEY TULYAKOV** ; **KFIR ABERMAN** ; **DANIEL COHEN-OR. MYVLM**. Personalizing vlms for user-specific queries. *arXiv:2403.14599*, 2024
- **YUVAL ALALUF** ; **ELAD RICHARDSON** ; **SERGEY TULYAKOV** ; **KFIR ABERMAN** ; **DANIEL COHEN-OR. MYVLM**. Personalizing vlms for user-specific queries.. *arXiv:2403.14599*, 2024
- **MATHILDE CARON** ; **HUGO TOUVRON** ; **ISHAN MISRA** ; **HERV'E J'EGOU** ; **JULIEN MAIRAL** ; **PIOTR BOJANOWSKI** ; **ARMAND JOULIN**. Emerging properties in selfsupervised vision transformers.. *Proceedings of the IEEE/CVF international conference on computer vision*, 2021, 9650-9660
- **ZHE CHEN** ; **JIANNAN WU** ; **WENHAI WANG** ; **WEIJIE SU** ; **GUO CHEN** ; **SEN XING** ; **MUYAN ZHONG** ; **QINGLONG ZHANG** ; **XIZHOU ZHU** ; **LEWEI LU et al.** Internvl: Scaling up vision foundation models and aligning for generic visual-linguistic tasks.. *Proceedings of the IEEE/CVF Conference on Computer Vision and Pattern Recognition*, 2024, 24185-24198
- **CHAO JIA** ; **YINFEI YANG** ; **YE XIA** ; **YI-TING CHEN** ; **ZARANA PAREKH** ; **HIEU PHAM** ; **QUOC LE** ; **YUN-HSUAN SUNG** ; **ZHEN LI** ; **TOM DUERIG**. Scaling up visual and vision-language representation learning with noisy text supervision. *International conference on machine learning*, 2021, 4904-4916
- **ALEXANDER KIRILLOV** ; **ERIC MINTUN** ; **NIKHILA RAVI** ; **HANZI MAO** ; **CHLOE ROLLAND** ; **LAURA GUSTAFSON** ; **TETE XIAO** ; **SPENCER WHITEHEAD** ; **ALEXANDER C BERG** ; **WAN YEN LO et al.** Segment anything.. *Proceedings of the IEEE/CVF International Conference on Computer Vision*, 2023, 4015-4026
- **HAOTIAN LIU** ; **CHUNYUAN LI** ; **YUHENG LI** ; **BO LI** ; **YUANHAN ZHANG** ; **SHENG SHEN** ; **YONG JAE**. *Lee Llava-next: Improved reasoning, ocr, and worldknowledge*, 2024
- **SHILONG LIU** ; **ZHAOYANG ZENG** ; **TIANHE REN** ; **FENG LI** ; **HAO ZHANG** ; **JIE YANG** ; **QING JIANG** ; **CHUNYUAN LI** ; **JIANWEI YANG** ; **HANG SU et al.** Grounding dino: Marrying dino with grounded pre-training for open-set object detection. *arXiv:2303.05499*, 2023
- **THAO NGUYEN** ; **HAOTIAN LIU** ; **YUHENG LI** ; **MU CAI** ; **UTKARSH OJHA** ; **YONG JAE LEE**. Yo'llava: Your personalized language and vision assistant. *arXiv:2406.09400*, 2024
- **ALEC RADFORD** ; **JONG WOOK KIM** ; **CHRIS HALLACY** ; **ADITYA RAMESH** ; **GABRIEL GOH** ; **SANDHINI AGARWAL** ; **GIRISH SASTRY** ; **AMANDA ASKELL** ; **PAMELA MISHKIN** ; **JACK CLARK et al.** Learning transferable visual models from natural language supervision.. *International conference on machine learning*, 2021, 8748-8763
- **TIANHE REN** ; **SHILONG LIU** ; **AILING ZENG** ; **JING LIN** ; **KUNCHANG LI** ; **HE CAO** ; **JIAYU CHEN** ; **XINYU HUANG** ; **YUKANG CHEN** ; **FENG YAN et al.** Grounded sam: Assembling open-world models for diverse visual tasks. *arXiv:2401.14159*, 2024